# FASCICULE DE BREVET EUROPEEN

(11) **EP 2 733 066 B1**
(45) Date de publication et mention de la délivrance du brevet: **15.04.2015**
(21) Numéro de dépôt: 13004967.9
(22) Date de dépôt: 17.10.2013
(51) Int. Cl.: B64C 25/56, B64D 25/18, B64C 27/28

(54) **Procédé de déclenchement automatique d'un système de flottabilité de secours pour hélicoptère hybride**
Verfahren zur automatischen Auslösung eines Notschwimmwerksystems für Hybridhubschrauber
Method for automatically triggering an emergency buoyancy system for a hybrid helicopter

(30) Priorité: 14.11.2012 FR 1203050
(43) Date de publication de la demande: 21.05.2014
(73) Titulaire: Airbus Helicopters, 13725 Marignane Cedex (FR)
(72) Inventeur: Cacciaguerra, Bruno, 13850 Greasque (FR)
(74) Mandataire: GPI & Associés

(56) Documents cités:
- EP-A2- 2 457 826
- WO-A1-2012/113038
- FR-A- 1 368 083
- GB-A- 895 590
- US-A- 5 765 778

## Description

La présente invention se situe dans le domaine technique des systèmes de flottabilité permettant l'amerrissage d'un aéronef. La présente invention concerne un procédé de déclenchement automatique d'un système de flottabilité de secours pour un aéronef et en particulier pour un hélicoptère hybride. La présente invention concerne également un système de flottabilité de secours mettant en oeuvre ce procédé ainsi qu'un hélicoptère hybride comportant un tel système.

Un système de flottabilité de secours participe à la flottaison et la stabilité d'un aéronef, tel un hélicoptère, lors d'un amerrissage forcé pour permettre notamment l'évacuation des occupants de cet aéronef. Tous les aéronefs voués aux missions de transport de personnes en zones maritimes sont équipés en principe d'un tel système de flottabilité.

En effet, la réglementation opérationnelle aéronautique impose notamment aux hélicoptères qui transportent des passagers et survolent de grandes étendues d'eau de démontrer leur capacité d'amerrissage. L'amerrissage est la prise de contact de l'hélicoptère avec la surface de l'eau ainsi que le maintien à l'équilibre de cet hélicoptère sur cette surface de l'eau. Cet équilibre doit être assuré, pendant que le rotor principal de cet hélicoptère tourne, pendant la phase transitoire d'arrêt de ce rotor principal et enfin lorsque ce rotor principal est arrêté.

Un système de flottabilité de secours comprend généralement plusieurs flotteurs situés dans la partie inférieure du fuselage de l'aéronef. Ces flotteurs, qui sont généralement des enveloppes gonflables, sont gonflés par un ou plusieurs générateurs de fluide, ces générateurs étant des réservoirs de gaz sous pression ou de type pyrotechnique par exemple.

Sur les aéronefs actuels, ce gonflement des flotteurs peut être commandé soit manuellement par le pilote ou le copilote de l'aéronef, soit par un déclenchement automatique, grâce à un ou plusieurs capteurs d'immersion qui détectent l'amerrissage de l'aéronef par le contact avec l'eau. Cependant, le système de flottabilité doit au préalable être armé à l'aide d'un bouton de commande dédié, cet armement ayant lieu en cas de survol maritime. L'armement de ce système de flottabilité a pour but de limiter le risque de déclenchement intempestif.

Pour les aéronefs comprenant des éléments tournants, il est préférable d'éviter que ces éléments tournants n'entrent en contact avec la surface de l'eau lors d'un amerrissage. En effet, s'ils entrent en contact avec la surface de l'eau, des risques de rupture et de projection de tout ou partie de ces éléments tournants existent, pouvant générer alors des dégâts importants à l'aéronef et à son système de flottabilité de secours, et surtout de graves blessures aux occupants de l'aéronef.

Dans le cas d'un hélicoptère classique, un rotor principal de sustentation voire de propulsion est suffisamment haut par rapport à l'appareil, généralement au-dessus du fuselage, pour minimiser le risque d'interférence entre ce rotor principal et la surface de l'eau.

Par contre, dans le cas d'un hélicoptère hybride, au moins un élément tournant remplissant la fonction de propulsion et d'anti-couple, tel une hélice propulsive, a une position rendant possible un contact avec la surface de l'eau lors d'un amerrissage. Par exemple un hélicoptère hybride peut comporter des demi-ailes de part et d'autre d'un fuselage, chaque demi-aile supportant une hélice propulsive.

On connaît le document FR1368083 qui décrit un hélicoptère muni d'un seul rotor principal et comportant un dispositif de sécurité pour le flottement de cet hélicoptère sur l'eau. Un tel dispositif de sécurité comporte un flotteur gonflé en permanence et situé dans la queue de l'hélicoptère ainsi que deux flotteurs non gonflés, positionnés dans le moyeu de deux roues du train d'atterrissage. Ce dispositif comporte également deux capteurs d'immersion déclenchant le gonflement des flotteurs par l'intermédiaire d'un générateur de gaz.

On connaît également le document FR2967972 qui décrit un procédé de commande d'un système de flottabilité de secours limitant le risque d'un déclenchement intempestif. Un tel système de flottabilité comporte au moins un flotteur et un moyen de gonflement du flotteur ainsi qu'un moyen d'armement pour activer le moyen de gonflement du flotteur, un ordre de gonflement du flotteur pouvant ensuite être fourni manuellement par le pilote par exemple ou bien automatiquement par au moins deux capteurs d'immersion.

Selon ce procédé, le pilote ou le copilote dispose d'un temps prédéterminé pour confirmer ou infirmer un ordre de gonflement et éviter ainsi un gonflement intempestif de chaque flotteur. Cependant, certaines conditions correspondant à une forte probabilité d'amerrissage entraînent un gonflement immédiat de chaque flotteur sans attendre une confirmation du pilote.

Par ailleurs, on connait le document FR666671 qui décrit un aéroplane muni de deux ailes, d'un flotteur central et de deux flotteurs latéraux positionnés sous l'extrémité de chaque aile, transformant ainsi cet aéroplane en hydroplane. De plus, cet aéroplane comporte un train d'atterrissage sous le flotteur central muni d'un essieu équipé de deux roues et d'une béquille de queue équipée d'un patin. Cet essieu peut être relevé ou abaissé, permettant respectivement à l'aéroplane d'amerrir sur une surface d'eau ou bien d'atterrir sur une piste.

De plus, le document FR1100863 décrit un avion comportant un système de décollage et d'atterrissage muni d'un atterrisseur principal monotrace, d'atterrisseurs complémentaires en bout d'aile ainsi que d'un dispositif auxiliaire restant au sol. Les atterrisseurs complémentaires sont positionnés sous les ailes et comportent chacun un patin escamotable. L'atterrisseur principal monotrace comporte une roue avant orientable et escamotable ainsi qu'un patin central également escamotable. Le dispositif auxiliaire est constitué par un essieu et deux roues jumelées se positionnant sous le patin central lors d'un décollage et restant au sol après le décollage. Lors de l'atterrissage, l'avion se pose directement sur la roue avant, le patin central et les atterrisseurs complémentaires.

On connaît également un avion, le Sea harrier^{®}, possédant des atterrisseurs complémentaires sous chaque aile, dénommés également balancines, permettant de stabiliser l'avion au sol uniquement.

En outre, le document GB895590 décrit un hélicoptère muni d'un rotor principal, de deux demi-ailes et de deux hélices propulsives respectivement fixées sur une demi -aile et entrainées en rotation par une turbine indépendante et dédiée. Chaque demi-aile est pliable vers le bas à son extrémité, au-delà de l'hélice propulsive. De plus, un réservoir à carburant est positionné à l'extrémité de chaque demi-aile et peut exercer la fonction de flotteur, lorsque les extrémités des demi-ailes sont pliées, l'hélicoptère se trouvant sur une surface d'eau.

Selon le document US5765778, un aéronef comporte un dispositif de secours comportant une pluralité de moteurs auxiliaires et de ballons gonflables. Ces moteurs auxiliaires sont orientables et peuvent exercer notamment une poussée verticale afin de réduire la vitesse de descente de l'aéronef en cas d'atterrissage d'urgence. Les ballons gonflables, positionnés dans une zone inférieure du fuselage de l'aéronef, peuvent être gonflés instantanément pour amortir le choc de cet atterrissage d'urgence. Les moteurs auxiliaires comportent également des protections permettant elles aussi d'amortir le choc avec le sol lors de cet atterrissage d'urgence.

Enfin, le document WO012/113038 décrit un système de flottabilité comprenant au moins une enveloppe gonflable, un dispositif de gonflage et un système de détection et d'activation. Ce système de flottabilité permet ainsi d'augmenter la flottabilité de l'aéronef afin de disposer notamment d'un temps suffisant pour évacuer les occupants de l'aéronef lors d'un amerrissage.

La présente invention a alors pour objet de proposer un procédé de déclenchement d'un système de flottabilité de secours permettant d'éviter ou de minimiser les contacts entre un élément tournant d'un aéronef, tel un rotor principal ou bien une hélice propulsive, et la surface de l'eau lors d'un amerrissage.

Selon l'invention, un système de flottabilité de secours comporte au moins une enveloppe gonflable principale apte à être agencée dans la partie inférieure du fuselage et une pluralité de capteurs d'immersion.

Un procédé de déclenchement d'un système de flottabilité de secours selon l'invention est destiné à un aéronef muni notamment d'un fuselage et de deux demi-ailes situées de part et d'autre du fuselage ainsi que d'au moins une hélice propulsive. Chaque hélice propulsive peut être fixée par exemple sur une demi-aile.

Plus particulièrement, ce procédé de déclenchement d'un système de flottabilité de secours est destiné à un hélicoptère hybride comportant un fuselage, un rotor principal assurant la sustentation voire la propulsion de l'hélicoptère hybride et deux demi-ailes situées de part et d'autre du fuselage ainsi que d'au moins une hélice propulsive. De préférence, cet hélicoptère hybride comporte deux hélices propulsives fixées sur les demi-ailes.

Au cours de ce procédé de déclenchement d'un système de flottabilité de secours :
- on agence au moins une enveloppe gonflable secondaire sous chaque demi-aile de l'aéronef,
- on agence au moins un atterrisseur d'aile escamotable sous chaque demi-aile de l'aéronef, chaque atterrisseur d'aile étant muni d'au moins un capteur d'immersion,
- on arme le système de flottabilité de secours,
- on détermine s'il y a un risque d'amerrissage de l'aéronef,
- on déploie chaque atterrisseur d'aile lorsqu'un risque d'amerrissage est avéré,
- on détermine à l'aide d'au moins un capteur d'immersion le début de l'amerrissage de l'aéronef,
- on gonfle chaque enveloppe gonflable principale et chaque enveloppe gonflable secondaire lorsqu'un amerrissage est avéré.

Tout d'abord, pour être opérationnel, le système de flottabilité de secours doit être armé. En effet, afin de limiter les risques de gonflement intempestif et accidentel de chaque enveloppe, on arme le système de flottabilité de secours uniquement lorsque l'aéronef survole une zone maritime. Ainsi, lors d'un vol au-dessus d'une zone terrestre ou bien lorsque l'aéronef n'est pas en vol, le système de flottabilité de secours n'est pas armé, donc pas opérationnel. Par suite, il n'y a pas de risque de gonflement accidentel des enveloppes du système de flottabilité de secours.

Chaque enveloppe principale, une fois gonflée, peut éventuellement assurer une flottabilité suffisante de l'aéronef lors d'un amerrissage. Cependant, il est nécessaire d'obtenir une bonne stabilité en roulis en minimisant l'impact de la masse de l'aéronef ainsi que d'éviter ou de minimiser les contacts entre chaque hélice propulsive et la surface de l'eau. Pour cela, au moins une enveloppe gonflable secondaire est agencée sous chaque demi-aile de l'aéronef. Ainsi, chaque enveloppe secondaire gonflée agit comme un flotteur positionné sous chaque demi-aile, de préférence à proximité de l'hélice propulsive, permet à chaque hélice propulsive de rester au-dessus de la surface de l'eau, et assure une grande stabilité en roulis à l'aéronef posé sur la surface de l'eau. De fait, un espace suffisant entre chaque hélice propulsive et la surface de l'eau doit exister pour prendre en compte une agitation possible de cette surface de l'eau afin de maintenir au mieux chaque hélice propulsive hors de l'eau. Par exemple, la plus courte distance entre chaque hélice propulsive et la surface de l'eau, l'aéronef flottant sur une surface plane et sans agitation est de 30 centimètres (cm).

Par ailleurs, le début de l'amerrissage de l'aéronef est déterminé par l'intermédiaire de capteurs d'immersion. Ces capteurs d'immersion sont traditionnellement positionnés sous le fuselage de l'aéronef, par exemple au niveau des logements des roues du train d'atterrissage, quand celles-ci sont escamotables dans le fuselage, ou bien sur le train d'atterrissage lui-même. Ainsi, les capteurs d'immersion sont immergés, et par suite signalent leur immersion, dès le début de l'amerrissage de l'aéronef. De fait, ces capteurs d'immersion permettent de déterminer le début de l'amerrissage de l'aéronef. Par suite, chaque enveloppe principale et secondaire est gonflée pour assurer la flottabilité de l'aéronef.

Cependant, étant donnée la faible distance verticale entre le dessous du fuselage et le point bas de la trajectoire du bout des pales des hélices propulsives, les capteurs d'immersion positionnés sous le fuselage de l'aéronef ne permettent pas de détecter le début de l'amerrissage afin que les ballons puissent se gonfler avant que les hélices ne touchent l'eau. Certains capteurs d'immersion doivent donc être placés plus bas, c'est-à-dire à un niveau inférieur à la surface inférieure du fuselage.

Dans ce but, le système de flottabilité de secours comporte au moins un atterrisseur d'aile sous chaque demi-aile de l'aéronef. Chaque atterrisseur d'aile a une hauteur suffisante pour entrer en partie en contact avec l'eau avant l'hélice propulsive. Au moins un capteur d'immersion est alors positionné sur cet atterrisseur d'aile, de préférence à une extrémité, permettant de déterminer le début de l'amerrissage de l'aéronef. Un tel positionnement de ces capteurs d'immersion permet avantageusement la détection du début d'un amerrissage même si l'aéronef a un angle de roulis non nul.

En effet, au moins un capteur d'immersion présent sur l'atterrisseur d'aile est immergé, et par suite signale son immersion, au moment de l'entrée en contact de cet atterrisseur d'aile avec l'eau et avant même que le fuselage de l'aéronef soit en contact avec l'eau. Cependant, l'amerrissage étant, comme évoqué précédemment la prise de contact de l'aéronef avec la surface de l'eau, on peut considérer que l'atterrisseur d'aile entre en contact avec l'eau au moment de l'amerrissage de l'aéronef. De fait, ces capteurs d'immersion permettent de déterminer le début de l'amerrissage de l'aéronef avant que chaque hélice propulsive puisse entrer en contact avec la surface de l'eau. Par suite, chaque enveloppe principale et secondaire est gonflée pour assurer la flottabilité de l'aéronef ainsi que pour éviter ou minimiser tout contact entre chaque hélice propulsive et la surface de l'eau.

Avantageusement, chaque atterrisseur d'aile peut également être utilisé pour un atterrissage. En effet, l'aéronef peut également atterrir avec un angle de roulis important, notamment en cas de fort vent latéral. Cet angle de roulis peut par exemple être compris entre 10° et 16° pour un vent latéral respectivement compris entre 15 et 35 noeuds (15 à 35 kt). Dans ces conditions, un moyen efficace d'éviter un contact entre une hélice propulsive et le sol est l'installation d'un atterrisseur d'aile. En effet, chaque atterrisseur d'aile ayant une hauteur suffisante pour entrer en contact avec l'eau avant l'hélice propulsive, il en est de même avec le sol. De fait, l'hélice est protégée lors de l'atterrissage.

De plus, ce phénomène est accentué lorsque l'atterrissage est réalisé sur un sol en pente ou sur un navire, par exemple par mer agitée.

Afin de faciliter cet atterrissage, une roue ou bien un patin peuvent être positionnés à l'extrémité de l'atterrisseur d'aile. Chaque capteur d'immersion peut alors être positionné sur cette roue ou sur ce patin.

Chaque enveloppe secondaire étant située sous une demi-aile, cette enveloppe peut par exemple être fixée sur un atterrisseur d'aile, par exemple dans un moyeu d'une roue de cet atterrisseur d'aile. Ainsi, chaque enveloppe est rangée, pliée, dans ce moyeu de la roue de chaque atterrisseur d'aile et est expulsée lors de son gonflement pour être gonflée à l'extérieur du moyeu de cette roue.

Chaque enveloppe secondaire peut également être fixée sur un support articulé lié à l'atterrisseur d'aile. Ce support articulé se déploie alors dès que le début de l'amerrissage est détecté. Le déploiement de ce support articulé peut être simultané au gonflement de chaque enveloppe secondaire ou bien se dérouler juste avant le gonflement de chaque enveloppe secondaire.

Chaque enveloppe secondaire peut également être fixée directement à une demi-aile. Dans ce cas, chaque enveloppe secondaire doit avoir une taille suffisante pour, une fois gonflée, maintenir un espace suffisant entre chaque hélice propulsive et la surface de l'eau.

Afin de limiter la taille de chaque enveloppe secondaire, chaque demi-aile peut être articulée à proximité de son extrémité afin de se plier vers le bas, c'est-à-dire vers la surface de l'eau. Dans ce cas, chaque enveloppe secondaire fixée à l'extrémité de chaque demi-aile peut être de taille réduite.

Le train d'atterrissage de l'aéronef peut comporter un atterrisseur principal, escamotable dans le fuselage et composé par exemple d'au moins une roue droite et d'au moins une roue gauche, ainsi qu'un atterrisseur secondaire, escamotable également dans le fuselage et composé par exemple d'au moins une roue directionnelle. Cet atterrisseur secondaire peut être placé en avant ou en arrière de l'atterrisseur principal.

Le train d'atterrissage de l'aéronef peut également être constitué par un tricycle fixe, c'est-à-dire non escamotable, comprenant deux roues à l'avant et une roue orientable à l'arrière par exemple.

Par ailleurs, afin de ne pas perturber l'aérodynamisme de l'aéronef et de ne pas générer une traînée aérodynamique en vol, il est intéressant que chaque atterrisseur d'aile soit logé dans l'aile pendant chaque vol. De plus, chaque atterrisseur d'aile est ainsi protégé de tout choc pouvant intervenir pendant le vol et risquant de le dégrader.

Par contre, afin de détecter un amerrissage de l'aéronef à l'aide d'un capteur d'immersion positionné sur chaque atterrisseur d'aile, il est nécessaire de déployer chaque atterrisseur d'aile avant un amerrissage. Ce déploiement de chaque atterrisseur d'aile peut être partiel ou total, suivant la position de chaque capteur d'immersion sur chaque atterrisseur d'aile et de la longueur de chaque atterrisseur d'aile. Chaque atterrisseur d'aile se positionne alors à une position adaptée à l'amerrissage permettant à chaque capteur d'immersion qu'il comporte de déterminer le début de l'amerrissage avant qu'une hélice propulsive entre en contact avec la surface de l'eau. Le déploiement de chaque enveloppe secondaire se produira à cette position adaptée à l'amerrissage de chaque atterrisseur d'aile. Par contre, lors d'un atterrissage, le déploiement de chaque atterrisseur d'aile doit être total.

Avantageusement, le procédé permet de déterminer un risque d'amerrissage de l'aéronef. Puis, lorsque ce risque d'amerrissage est avéré, on déploie chaque atterrisseur d'aile jusqu'à sa position adaptée à l'amerrissage. Bien entendu, le système de flottabilité de secours doit préalablement avoir été armé pour que l'on déploie chaque atterrisseur d'aile dès que le risque d'amerrissage est avéré.

Par exemple, un risque d'amerrissage de l'aéronef est avéré lorsque l'aéronef est en dessous d'une hauteur prédéterminée. On entend par « hauteur » la distance selon la direction de la pesanteur terrestre séparant l'aéronef de la surface survolée par l'aéronef. Ainsi, dès que l'aéronef se rapproche de la surface de l'eau, c'est-à-dire dès qu'il atteint une hauteur inférieure à la hauteur prédéterminée, un risque d'amerrissage de l'aéronef est avéré, et par suite on déploie chaque atterrisseur d'aile. La hauteur prédéterminée est par exemple 10 mètres (m).

Cependant, il est possible selon un fonctionnement optionnel du procédé, de n'autoriser le déploiement de chaque atterrisseur d'aile qu'après une validation du pilote de l'aéronef. Selon ce fonctionnement optionnel, le procédé indique au pilote, par exemple par l'intermédiaire d'un message d'alerte visuel et/ou sonore, qu'un risque d'amerrissage de l'aéronef est avéré. Le pilote peut alors valider par un moyen de validation, tel un bouton poussoir, s'il considère qu'il y a bien un risque d'amerrissage, autorisant ainsi le déploiement de chaque atterrisseur d'aile.

Ce procédé peut comporter une ou plusieurs des caractéristiques suivantes.

Afin de limiter notamment les risques de gonflement intempestif et accidentel des enveloppes de ce système de flottabilité de secours, on détermine l'amerrissage de l'aéronef lorsqu'au moins deux capteurs d'immersion du système de flottabilité de secours signalent une immersion. Ainsi, si un capteur d'immersion est défaillant et signale de façon erronée un amerrissage, il n'y aura pas de gonflement des enveloppes.

Comme évoqué précédemment, il est possible, si l'aéronef a un angle de roulis non nul que l'on détermine l'amerrissage par l'intermédiaire d'au moins un capteur d'immersion positionné sur un atterrisseur d'aile. De fait, afin de limiter les risques de gonflement intempestif et accidentel des enveloppes de ce système de flottabilité de secours, on détermine l'amerrissage de l'aéronef lorsqu'au moins deux capteurs d'immersion d'un atterrisseur d'aile signalent une immersion. Dans ce cas, et pour prévenir une défaillance d'un capteur, chaque atterrisseur d'aile comporte au moins trois capteurs d'immersion.

Outre un procédé, la présente invention a pour objet un système de flottabilité de secours mettant en oeuvre ce procédé

Un tel système de flottabilité de secours est destiné à un aéronef muni d'un fuselage et de deux demi-ailes situées de part et d'autre du fuselage, et en particulier à un hélicoptère hybride.

Le système de flottabilité de secours comporte au moins une enveloppe gonflable principale apte à être agencée sous le fuselage, au moins une enveloppe gonflable secondaire apte à être agencée sous chaque demi-aile et une pluralité de capteurs d'immersion pour déterminer l'amerrissage de l'aéronef. De plus, il comporte également au moins un atterrisseur d'aile escamotable muni d'au moins un capteur d'immersion et apte à être agencé sous chaque demi-aile.

Ce système de flottabilité de secours, apte à mettre en oeuvre le procédé précédemment évoqué, comporte également :
- un moyen d'armement pour armer le système de flottabilité de secours,
- un moyen d'anticipation pour déterminer s'il y a un risque d'amerrissage de l'aéronef,
- un moyen de déploiement pour déployer chaque atterrisseur d'aile,
- un moyen de déclenchement relié au moyen d'armement pour ordonner le gonflement des enveloppes gonflables,
- un système de gonflement comportant au moins un générateur de fluide pour gonfler les enveloppes gonflables, le système de gonflement étant relié au moyen de déclenchement.

Le moyen d'armement est manuel, tel un interrupteur ou un bouton poussoir, et permet au pilote ou au copilote de l'aéronef d'activer le système de flottabilité de secours dès qu'il survole une grande étendue d'eau.

Le moyen d'anticipation comporte, par exemple, un capteur de hauteur de l'aéronef par rapport à la surface de l'eau, le risque d'amerrissage étant avéré lorsque cet aéronef est en dessous d'une hauteur prédéterminée.

Le moyen de déploiement permet, lorsqu'un risque d'amerrissage est avéré, de déployer chaque atterrisseur d'aile, c'est-à-dire de sortir cet atterrisseur de sa position escamotée dans chaque demi-aile jusqu'à sa position adaptée à l'amerrissage, permettant la détection de l'amerrissage à l'aide de chaque capteur d'immersion. Ce moyen de déploiement est par exemple un vérin ou un ensemble de vérins hydrauliques permettant le déplacement de chaque atterrisseur d'aile.

Ce moyen de déploiement permet également de déployer totalement chaque atterrisseur d'aile dans le cas d'un atterrissage.

De plus, chaque enveloppe gonflable secondaire comporte un moyen de fixation. Dans un mode de réalisation de l'invention, le moyen de fixation permet de fixer cette enveloppe gonflable secondaire à un atterrisseur d'aile, par exemple dans un moyeu d'une roue de cet atterrisseur d'aile.

Selon un autre exemple, le moyen de fixation permet de fixer l'enveloppe gonflable secondaire sur un support articulé lié à l'atterrisseur d'aile. Ce support articulé se déploie dès que le début de l'amerrissage est détecté.

Selon une variante, le moyen de fixation d'une enveloppe gonflable secondaire permet de fixer cette enveloppe gonflable secondaire à une demi-aile.

Par ailleurs, afin de prévenir une éventuelle défaillance d'un capteur d'immersion, chaque atterrisseur d'aile comporte au moins trois capteurs d'immersion. De plus, afin de limiter les risques de déclenchement intempestif ou accidentel du gonflement de chaque enveloppe principale et de chaque enveloppe secondaire, par exemple lorsqu'un capteur d'immersion est défaillant, le moyen de déclenchement ordonne le gonflement des enveloppes quand au moins deux capteurs d'immersion du système de flottabilité de secours signalent une immersion.

Enfin, le système de gonflement doit permettre un gonflement très rapide, voire quasi instantané, des enveloppes gonflables, dès la détection de l'amerrissage de l'aéronef. Ce système de gonflement peut comporter plusieurs générateurs de fluide, un par enveloppe gonflable par exemple. Ces générateurs sont de préférence de type pyrotechnique, mais ils peuvent également être constitués par des réservoirs de gaz sous pression.

Eventuellement, le système de flottabilité de secours selon l'invention comporte un moyen de validation, tel un bouton poussoir, afin de permettre, selon un fonctionnement optionnel, au pilote de l'aéronef de valider le déploiement des atterrisseurs d'aile après qu'un risque d'amerrissage de l'aéronef soit avéré.

Le système de flottabilité de secours selon l'invention peut également comporter un moyen de commande manuel qui permet au pilote ou au copilote de commander manuellement et directement le gonflement de chaque enveloppe principale et de chaque enveloppe secondaire, ce système ayant préalablement été activé à l'aide du moyen d'armement.

Le déploiement des atterrisseurs d'aile peut être automatique, lors de l'action du pilote sur ce moyen de commande manuel, ou nécessiter une action préalable du pilote pour ordonner ce déploiement.

Ce moyen de commande manuel, qui peut être un interrupteur ou un bouton poussoir par exemple, permet que chaque enveloppe principale et chaque enveloppe secondaire soient gonflées avant le contact de l'aéronef avec la surface de l'eau ou bien pallier une défaillance des capteurs d'immersion.

La présente invention a également pour objet un hélicoptère hybride comportant un tel système de flottabilité de secours. Cet hélicoptère hybride comporte un fuselage, un rotor principal situé au-dessus du fuselage, deux demi-ailes situées de part et d'autre du fuselage et au moins une hélice propulsive. De préférence, cet hélicoptère hybride comporte deux hélices propulsives situées de part et d'autre du fuselage.

L'invention et ses avantages apparaîtront avec plus de détails dans le cadre de la description qui suit avec des exemples de réalisation donnés à titre illustratif en référence aux figures annexées qui représentent :
- la figure 1, un schéma synoptique du procédé de déclenchement d'un système de flottabilité de secours selon l'invention,
- les figures 2 et 3, un hélicoptère hybride équipé d'un système de flottabilité de secours selon l'invention, et
- les figures 4 à 7, un hélicoptère hybride dont le système de flottabilité de secours a été déclenché.

Les éléments présents dans plusieurs figures distinctes sont affectés d'une seule et même référence.

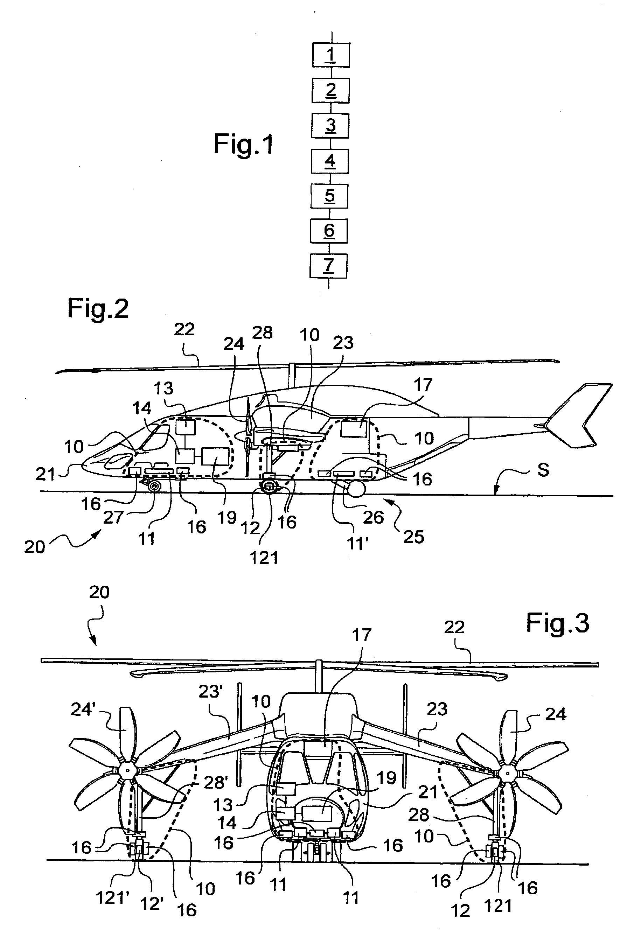

La figure 1 décrit un procédé de déclenchement d'un système de flottabilité de secours 10 pour un aéronef 20 et en particulier pour un hélicoptère hybride 20, ce procédé comportant plusieurs étapes.

Les figures 2 et 3 décrivent un hélicoptère hybride 20 muni d'un système de flottabilité de secours 10, l'hélicoptère hybride 20 étant posé sur le sol S, la figure 3 étant une vue de face et la figure 2 une vue de côté.

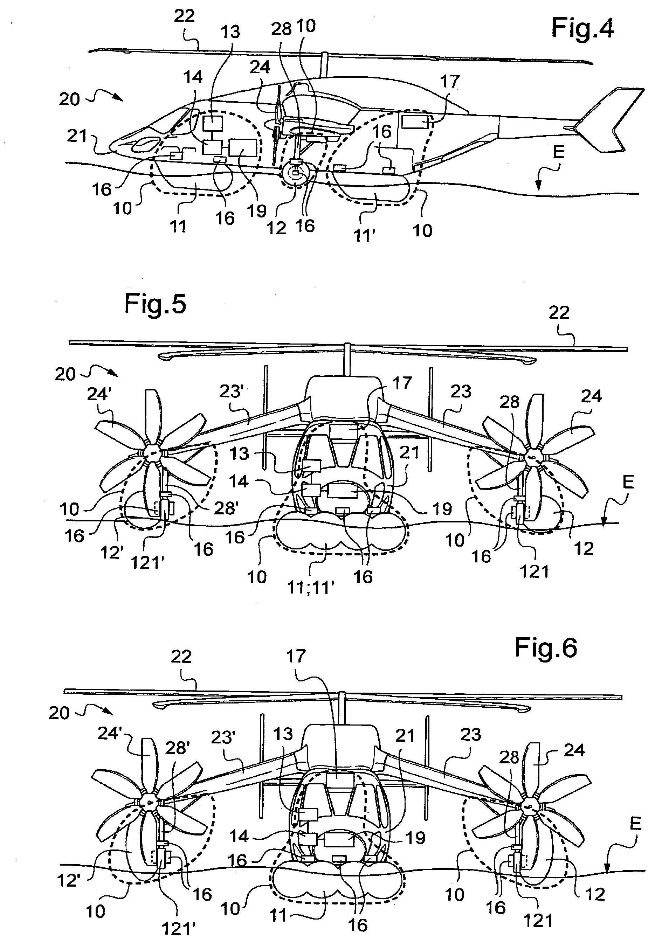

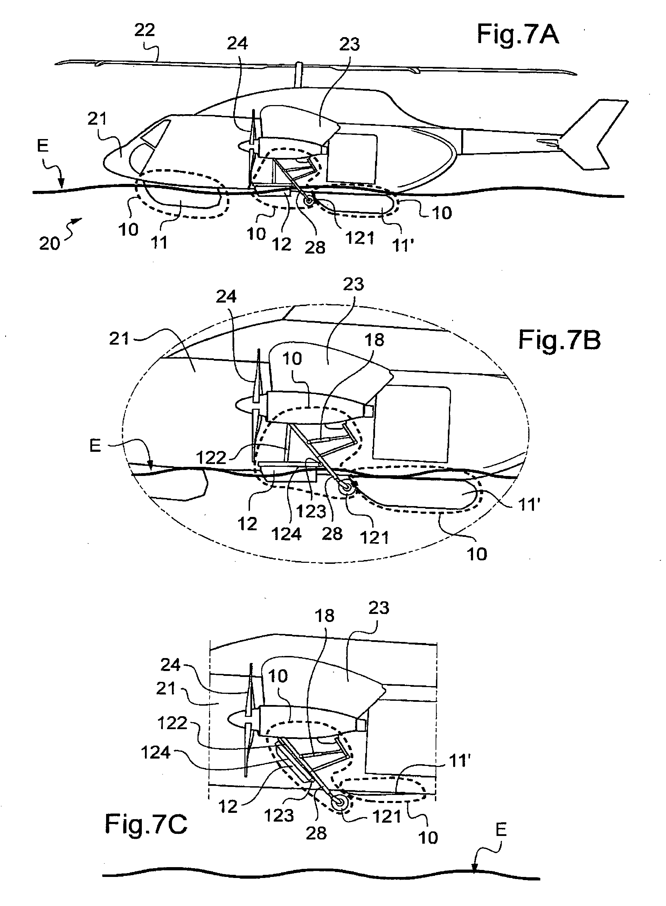

Les figures 4 à 7 décrivent un hélicoptère hybride 20 dont le système de flottabilité de secours 10 a été déclenché, l'hélicoptère hybride 20 flottant alors sur la surface de l'eau E. Les figures 5 et 6 sont des vues de face alors que les figures 4 et 7 sont des vues de côté.

Un tel hélicoptère hybride 20, représenté sur les figure 2 à 7, comporte un fuselage 21, un rotor principal 22 assurant la sustentation voire la propulsion de l'hélicoptère hybride 20 et deux demi-ailes 23,23' situées de part et d'autre du fuselage 21 ainsi que deux hélices propulsives 24,24' fixées sur les demi-ailes 23,23'.

Il est représenté sur les figures 2 et 3 un train d'atterrissage 25 de l'hélicoptère hybride 20 situé sous le fuselage 21 et muni d'un atterrisseur principal 26 composé d'une roue droite et d'une roue gauche ainsi qu'un atterrisseur secondaire 27 composé de deux roues directionnelles. Cet atterrisseur secondaire 27 est placé sous le nez du fuselage 21, c'est-à-dire en zone avant, l'atterrisseur principal étant situé sous la zone arrière du fuselage 21. Les atterrisseurs principal 26 et secondaire 27 sont escamotables dans le fuselage 21, afin de limiter leurs traînées aérodynamiques en vol.

Ce système de flottabilité de secours 10 comporte deux enveloppes gonflables principales 11,11' agencées dans la partie inférieure du fuselage 21 et une enveloppe gonflable secondaire 12,12' agencée sous chaque demi-aile 23,23'. De plus, ce système de flottabilité de secours 10 comporte un atterrisseur d'aile 28,28' agencé sous chaque demi-aile 23,23' et escamotable dans chaque demi-aile 23,23'

Chaque enveloppe gonflable secondaire 12,12' comporte également un moyen de fixation. Ce moyen de fixation permet par exemple de fixer cette enveloppe gonflable secondaire 12,12' à un atterrisseur d'aile 28,28'.

Dans le mode de réalisation de l'invention représenté sur la figure 5, le moyen de fixation permet de fixer cette enveloppe gonflable secondaire 12,12' dans un moyeu d'une roue 121,121' positionnée à l'extrémité de cet atterrisseur d'aile 28,28'. Les enveloppes gonflables principales 11,11' et secondaires 12,12' sont gonflées et l'atterrisseur d'aile 28,28' est sorti totalement ce qui correspond, dans ce mode de réalisation de l'invention, à sa position adaptée à l'amerrissage. Ce mode de réalisation est également représenté sur la figure 3, les enveloppes gonflables secondaires 12,12' n'étant pas gonflées.

Selon la variante représentée sur la figure 7, le moyen de fixation permet de fixer cette enveloppe gonflable secondaire 12,12' à un support articulé 124 lié à l'atterrisseur d'aile 28,28'. La figure 7a représente l'hélicoptère hybride 20 flottant à la surface de l'eau E, suite à un amerrissage. Les enveloppes gonflables principales 11,11' et secondaires 12,12' sont gonflées et l'atterrisseur d'aile 28,28' est sorti partiellement ce qui correspond, dans cette variante, à sa position adaptée à l'amerrissage. La figure 7b représente un détail de la figure 7a de la zone de l'atterrisseur d'aile 28,28', l'hélicoptère hybride 20 flottant à la surface de l'eau E, alors que la figure 7c représente ce même détail de l'hélicoptère hybride 20 juste avant l'amerrissage.

Selon la variante représentée sur la figure 6, le moyen de fixation permet de fixer cette enveloppe gonflable secondaire 12,12' à une demi-aile 23,23'.

De plus, ce système de flottabilité de secours 10 comporte une pluralité de capteurs d'immersion 16 pour déterminer le début de l'amerrissage de l'hélicoptère hybride 20. Certains de ces capteurs d'immersion 16 sont placés sous le fuselage 21 de l'hélicoptère hybride 20, par exemple au niveau des logements du train d'atterrissage 25. Trois capteurs d'immersion 16 sont également placés sur chaque atterrisseur d'aile 28,28', permettant ainsi de détecter un amerrissage et par suite de protéger chaque hélice propulsive 24,24'.

La position des capteurs d'immersion 16 sur chaque atterrisseur d'aile 28,28' permet de définir la position adaptée à l'amerrissage de ces atterrisseurs d'aile 28,28' afin de déterminer le début de l'amerrissage et de gonfler les enveloppes gonflables 11,11',12,12' avant qu'une hélice propulsive 24,24' entre en contact avec la surface de l'eau E. Le déploiement de chaque enveloppe secondaire 12,12' se produira à cette position adaptée à l'amerrissage de chaque atterrisseur d'aile 28,28'. Par contre, lors d'un atterrissage, le déploiement de chaque atterrisseur d'aile 28,28' est total.

Le système de flottabilité de secours 10 comporte également :
- un moyen d'armement 13 pour armer le système de flottabilité de secours 10,
- un moyen d'anticipation 17 pour déterminer s'il y a un risque d'amerrissage de l'hélicoptère hybride 20,
- un moyen de déploiement 18 pour déployer chaque atterrisseur d'aile 28,28',
- un moyen de déclenchement 14 relié au moyen d'armement 13 pour ordonner le gonflement des enveloppes gonflables 11,11',12,12',
- un système de gonflement 19 comportant au moins un générateur de fluide pour gonfler les enveloppes gonflables 11,11',12,12', le système de gonflement 19 étant relié au moyen de déclenchement 14.

Ce système de gonflement 19 doit permettre de gonfler très rapidement, voire quasi instantanément, les enveloppes gonflables principales 11,11' et secondaires 12,12', dès la détection de l'amerrissage de l'hélicoptère hybride 20. Ce système de gonflement 19 peut comporter plusieurs générateurs de fluide, un par enveloppe gonflable 11,11',12,12' par exemple. Ces générateurs sont de préférence de type pyrotechnique, mais ils peuvent également être constitués par des réservoirs de gaz sous pression.

Le moyen d'anticipation 17 comporte, par exemple, un capteur de hauteur de l'hélicoptère hybride 20 par rapport à la surface de l'eau E, le risque d'amerrissage étant avéré lorsque cet hélicoptère hybride 20 est en dessous d'une hauteur prédéterminée par rapport à cette surface de l'eau E.

Sur la figure 7c, le risque d'amerrissage est avéré, l'hélicoptère hybride 20 se trouvant proche de la surface de l'eau, à une hauteur inférieur à la hauteur prédéterminée. L'atterrisseur d'aile 28,28' a alors été déployé jusqu'à la position adaptée à l'amerrissage par l'intermédiaire du moyen de déploiement 18. Par contre, l'enveloppe gonflable secondaire 12,12', fixé au support articulé 124, et l'enveloppe gonflable principale 11' ne sont pas gonflées, le début de l'amerrissage n'ayant pas été détecté.

Sur la figure 7b, une fois que l'amerrissage a eu lieu, les enveloppes gonflables secondaires 12,12' et principale 11' ont été gonflées. L'atterrisseur d'aile 28,28' étant déjà en position adaptée à l'amerrissage, le support articulé 124 a également été déployé par l'intermédiaire d'un actionneur 122 dès que le début de l'amerrissage a été détecté, le support articulé 124 étant lié à l'atterrisseur d'aile 28,28' par une articulation 123.

Le procédé de déclenchement d'un tel système de flottabilité de secours 10 comprend alors les étapes suivantes selon la figure 1 :
- étape 1 : on agence une enveloppe gonflable secondaire 12,12' sous chaque demi-aile 23,23' de l'aéronef 20,
- étape 2 : on agence un atterrisseur d'aile 28,28' escamotable sous chaque demi-aile de l'aéronef 20, chaque atterrisseur d'aile 28,28' étant muni d'au moins un capteur d'immersion 16,
- étape 3 : on arme le système de flottabilité de secours 10,
- étape 4 : on détermine s'il y a un risque d'amerrissage de l'aéronef 20,
- étape 5 : on déploie chaque atterrisseur d'aile 28,28' lorsqu'un risque d'amerrissage est avéré,
- étape 6 : on détermine à l'aide d'au moins un capteur d'immersion 16, et de préférence deux capteurs d'immersion 16, le début de l'amerrissage de l'aéronef 20,
- étape 7 : on gonfle chaque enveloppe gonflable principale 11,11' et chaque enveloppe gonflable secondaire 12,12' lorsqu'un amerrissage est avéré.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles.

## Revendications

1. Procédé de déclenchement d'un système de flottabilité de secours (10) pour un aéronef (20) muni d'un fuselage (21) et de deux demi-ailes (23,23') situées de part et d'autre dudit fuselage (21), ledit système de flottabilité de secours (10) comportant :
- au moins une enveloppe gonflable principale (11) apte à être agencée dans la partie inférieure dudit fuselage (21) et
- une pluralité de capteurs d'immersion (16),
au cours duquel :
- on agence au moins une enveloppe gonflable secondaire (12,12') sous chaque demi-aile (23,23'),
- on agence au moins un atterrisseur d'aile (28,28') escamotable sous chaque demi-aile (23,23'), chaque atterrisseur d'aile (28,28') étant muni d'au moins un capteur d'immersion (16),
- on arme ledit système de flottabilité de secours (10),
- on détermine s'il y a un risque d'amerrissage dudit aéronef (20),
- on déploie chaque atterrisseur d'aile (28,28') lorsqu'un risque d'amerrissage est avéré,
- on détermine à l'aide d'au moins un capteur d'immersion (16) un début d'un amerrissage dudit aéronef (20),
- on gonfle chaque enveloppe gonflable principale (11,11') et chaque enveloppe gonflable secondaire (12,12') lorsque ledit amerrissage est avéré.

2. Procédé selon la revendication 1,
**caractérisé en ce que** l'on détermine qu'il y a un risque d'amerrissage dudit aéronef (20) lorsque ledit aéronef (20) est en dessous d'une hauteur prédéterminée.

3. Procédé selon l'une quelconque des revendications 1 à 2,
**caractérisé en ce que** l'on détermine ledit début dudit amerrissage dudit aéronef (20) lorsqu'au moins deux capteurs d'immersion (16) dudit système de flottabilité de secours (10) signalent une immersion.

4. Procédé selon la revendication 3,
**caractérisé en ce que**, chaque atterrisseur d'aile (28,28') comportant au moins trois capteurs d'immersion (16), on détermine ledit début dudit amerrissage dudit aéronef (20) lorsqu'au moins deux capteurs d'immersion (16) d'un atterrisseur d'aile (28,28') signalent une immersion.

5. Procédé selon l'une quelconque des revendications 1 à 4,
**caractérisé en ce que** l'on déploie chaque atterrisseur d'aile (28,28') après une validation dudit risque d'amerrissage par un pilote dudit aéronef (20).

6. Système de flottabilité de secours (10) pour un aéronef (20) muni d'un fuselage (21) et de deux demi-ailes (23,23') situées de part et d'autre dudit fuselage (21),
**caractérisé en ce que** ledit système de flottabilité de secours (10) est apte à mettre en oeuvre le procédé selon l'une quelconque des revendications 1 à 5, ledit système de flottabilité de secours (10) comportant :
- au moins une enveloppe gonflable principale (11,11') apte à être agencé sous ledit fuselage (21),
- au moins une enveloppe gonflable secondaire (12,12') apte à être agencé sous chaque demi-aile (23,23'),
- une pluralité de capteurs d'immersion (16) pour déterminer un début d'un amerrissage dudit aéronef (20),
- au moins un atterrisseur d'aile (28,28') escamotable muni d'au moins un capteur d'immersion (16) et apte à être agencé sous chaque demi-aile (23,23'),
- un moyen d'armement (13) pour armer ledit système de flottabilité de secours (10),
- un moyen d'anticipation (17) pour déterminer s'il y a un risque d'amerrissage dudit aéronef (20),
- un moyen de déploiement (18) pour déployer chaque atterrisseur d'aile (28,28'),
- un moyen de déclenchement (14) relié audit moyen d'armement (13) pour ordonner le gonflement desdites enveloppes gonflables (11,11',12,12'),
- un système de gonflement (19) comportant au moins un générateur de fluide (15) pour gonfler lesdites enveloppes gonflables (11,11',12,12'), ledit système de gonflement (19) étant relié audit moyen de déclenchement (14).

7. Système de flottabilité de secours (10) selon la revendication 6,
**caractérisé en ce que** ledit moyen d'anticipation (17) comporte un capteur de hauteur dudit aéronef (20), ledit risque d'amerrissage étant avéré lorsque ledit aéronef (20) est en dessous d'une hauteur prédéterminée.

8. Système de flottabilité de secours (10) selon l'une quelconque des revendications 6 à 7,
**caractérisé en ce que** chaque enveloppe gonflable secondaire (12,12') comporte un moyen de fixation, ledit moyen de fixation d'une enveloppe gonflable secondaire (12,12') fixant ladite enveloppe gonflable secondaire (12,12') à un atterrisseur d'aile (28,28').

9. Système de flottabilité de secours (10) selon la revendication 8,
**caractérisé en ce que** ledit moyen de fixation d'une enveloppe gonflable secondaire (12,12') fixe chaque enveloppe gonflable secondaire (12,12') dans un moyeu d'une roue (121,121') positionnée à l'extrémité de chaque atterrisseur d'aile (28,28').

10. Système de flottabilité de secours (10) selon la revendication 8,
**caractérisé en ce que** ledit moyen de fixation d'une enveloppe gonflable secondaire (12,12') fixe chaque enveloppe gonflable secondaire (12,12') sur un support articulé (124) lié audit atterrisseur d'aile (28,28') par une articulation (123), ledit support articulé (124) étant déployé par l'intermédiaire d'un actionneur (122) dès que le début de l'amerrissage a été détecté.

11. Système de flottabilité de secours (10) selon l'une quelconque des revendications 6 à 7,
**caractérisé en ce que** chaque enveloppe gonflable secondaire (12,12') comporte un moyen de fixation, ledit moyen de fixation d'une enveloppe gonflable secondaire (12,12') étant apte à fixer ladite enveloppe gonflable secondaire (12,12') à une demi-aile (23,23').

12. Système de flottabilité de secours (10) selon l'une quelconque des revendications 6 à 11,
**caractérisé en ce que** chaque atterrisseur d'aile (28,28') comporte au moins trois capteurs d'immersion (16).

13. Système de flottabilité de secours (10) selon l'une quelconque des revendications 6 à 12,
**caractérisé en ce que** ledit système de flottabilité de secours (10) comporte un moyen de validation permettant à un pilote dudit aéronef (20) de valider ledit risque d'amerrissage dudit aéronef (20).

14. Hélicoptère hybride (20) comportant :
- un fuselage (21),
- un rotor principal (22) situé au-dessus dudit fuselage (21),
- deux demi-ailes (23,23') situées de part et d'autre dudit fuselage (21) et
- au moins une hélice propulsive (24),
**caractérisé en ce qu'il** comporte un système de flottabilité de secours (10), selon l'une quelconque des revendications 6 à 13.

15. Hélicoptère hybride (20) selon la revendication 14,
**caractérisé en ce qu'il** comporte deux hélices propulsives (24,24') situées de part et d'autre dudit fuselage (21).

## Patentansprüche

1. Verfahren zur Auslösung eines Notschwimmwerksystems (10) für ein Luftfahrzeug (20) mit einem Rumpf (21) und zwei Flügelhälften (23, 23'), die zu beiden Seiten des Rumpfes (21) angeordnet sind, wobei das Notschwimmwerksystem (10) aufweist:
- mindestens eine aufblasbare Haupthülle (11), die in dem unteren Bereich des Rumpfes (21) angeordnet werden kann, und
- eine Mehrzahl von Eintauchdetektoren (16),
wobei bei dem Verfahren:
- mindestens eine aufblasbare Nebenhülle (12, 12') unter jeder Flügelhälfte (23, 23') angeordnet wird,
- mindestens ein ausklappbares Flügellandegestell (28, 28') unter jeder Flügelhälfte (23, 23') angeordnet wird, wobei jedes Flügellandegestell (28, 28') mit mindestens einem Eintauchdetektor (16) versehen ist,
- das Notschwimmwerksystem (10) entsichert wird,
- bestimmt wird, ob die Gefahr einer Wasserlandung des Luftfahrzeugs (20) besteht,
- jedes Flügellandegestell (28, 28') ausgefahren wird, wenn die Gefahr einer Wasserlandung erwiesen ist,
- mit Hilfe mindestens eines Eintauchdetektors (16) der Beginn einer Wasserlandung des Luftfahrzeugs (20) bestimmt wird,
- jede aufblasbare Haupthülle (11, 11') und jede aufblasbare Nebenhülle (12, 12') aufgeblasen wird, wenn die Wasserlandung erwiesen ist.

2. Verfahren nach Anspruch 1,
dadurch gekenntzeichnet, dass bestimmt wird, ob die Gefahr einer Wasserlandung des Luftfahrzeugs (20) besteht, wenn das Luftfahrzeug (20) sich unterhalb einer vorbestimmten Höhe befindet.

3. Verfahren nach einem der Ansprüche 1 bis 2,
**dadurch gekennzeichnet, dass** der Beginn der Wasserlandung des Luftfahrzeugs (20) bestimmt wird, wenn mindestens zwei Eintauchdetektoren (16) des Notschwimmwerksystems (10) ein Eintauchen signalisieren.

4. Verfahren nach Anspruch 3,
**dadurch gekennzeichnet, dass** jedes Flügellandegestell (28, 28') mindestens drei Eintauchdetektoren (16) aufweist, wobei der Beginn der Wasserlandung des Luftfahrzeugs (20) bestimmt wird, wenn mindestens zwei Eintauchdetektoren (16) eines Flügellandegestells (28, 28') ein Eintauchen signalisieren.

5. Verfahren nach einem der Ansprüche 1 bis 4,
**dadurch gekennzeichnet, dass** jedes Flügellandegestell (28, 28') nach einer Bestätigung der Gefahr einer Wasserlandung durch einen Piloten des Luftfahrzeugs (20) ausgefahren wird.

6. Notschwimmwerksystem (10) für ein Luftfahrzeug (20) mit einem Rumpf (21) und zwei Flügelhälften (23, 23'), die zu beiden Seiten des Rumpfs (21) angeordnet sind,
**dadurch gekennzeichnet, dass** das Notschwimmwerksystem (10) in der Lage ist, das Verfahren nach einem der Ansprüche 1 bis 5 auszuführen, wobei das Notschwimmwerksystem (10) aufweist:
- mindestens eine aufblasbare Haupthülle (11, 11'), die unter dem Rumpf (21) angeordnet werden kann,
- mindestens eine aufblasbare Nebenhülle (12, 12'), die unter jeder Flügelhälfte (23, 23') angeordnet werden kann,
- eine Mehrzahl von Eintauchdetektoren (16) zur Bestimmung des Beginns einer Wasserlandung des Luftfahrzeugs (20),
- mindestens ein ausklappbares Flügellandegestell (28, 28'), welches mit mindestens einem Eintauchdetektor (16) versehen ist, und welches unter jeder Flügelhälfte (23, 23') angeordnet werden kann,
- ein Entsicherungsmittel (13) zum Entsichern des Notschwimmwerksystems (10),
- ein Antizipationsmittel (17) zur Bestimmung, ob die Gefahr einer Wasserlandung des Luftfahrzeugs (20) besteht,
- ein Ausfahrmittel (18) zum Ausfahren eines jeden Flügellandegestells (28, 28'),
- ein Auslösemittel (14), welches mit dem Entsicherungsmittel (13) verbunden ist, um das Aufblasen der aufblasbaren Hüllen (11, 11', 12, 12') anzuordnen,
- ein Aufblassystem (19), welches mindestens einen Fluidgenerator (15) aufweist zum Aufblasen der aufblasbaren Hüllen (11, 11', 12, 12'), wobei das Aufblassystem (19) mit dem Auslösemittel (14) verbunden ist.

7. Notschwimmwerksystem (10) nach Anspruch 6, **dadurch gekennzeichnet, dass** das Antizipationsmittel (17) einen Höhenmesser des Luftfahrzeugs (20) aufweist, wobei die Gefahr einer Wasserlandung erwiesen ist, wenn das Luftfahrzeug (20) sich unterhalb einer vorbestimmten Höhe befindet.

8. Notschwimmwerksystem (10) nach einem der Ansprüche 6 bis 7, dadurch gekenntzeichnet, dass jede aufblasbare Nebenhülle (12, 12') ein Befestigungsmittel aufweist, wobei das Mittel zur Befestigung einer aufblasbaren Nebenhülle (12, 12') die aufblasbare Nebenhülle (12, 12') an einem Flügellandegestell (28, 28') befestigt.

9. Notschwimmwerksystem (10) nach Anspruch 8, **dadurch gekennzeichnet, dass** das Mittel zur Befestigung einer aufblasbaren Nebenhülle (12, 12') jede aufblasbare Nebenhülle (12, 12') in einer Nabe eines Rads (121, 121') befestigt, welches am Ende eines jeden Flügellandegestells (28, 28') angeordnet ist.

10. Notschwimmwerksystem (10) nach Anspruch 8, **dadurch gekennzeichnet, dass** das Mittel zur Befestigung einer aufblasbaren Nebenhülle (12, 12') jede aufblasbare Nebenhülle (12, 12') auf einem angelenkten Träger (124) befestigt, der mit dem Flügellandegestell (28, 28') über ein Gelenk (123) verbunden ist, wobei der angelenkte Träger (124) über ein Betätigungsorgan (122) ausgefahren wird, sobald der Beginn einer Wasserlandung erfasst wurde.

11. Notschwimmwerksystem (10) nach einem der Ansprüche 6 bis 7, **dadurch gekennzeichnet, dass** jede aufblasbare Nebenhülle (12, 12') ein Befestigungsmittel aufweist, wobei das Mittel zur Befestigung einer aufblasbaren Nebenhülle (12, 12') die aufblasbare Nebenhülle (12 ,12') an einer Flügelhälfte (23, 23') befestigen kann.

12. Notschwimmwerksystem (10) nach einem der Ansprüche 6 bis 11, **dadurch gekennzeichnet, dass** jedes Flügellandegestell (28, 28') mindestens drei Eintauchdetektoren (16) aufweist.

13. Notschwimmwerksystem (10) nach einem der Ansprüche 6 bis 12, **dadurch gekennzeichnet, dass** das Notschwimmwerksystem (10) ein Bestätigungsmittel aufweist, das es einem Piloten des Luftfahrzeugs (20) erlaubt, die Gefahr einer Wasserlandung des Luftfahrzeugs (20) zu bestätigen.

14. Hybridhubschrauber (20) mit:
- einem Rumpf (21),
- einem Hauptrotor (22), der oberhalb des Rumpfes (21) angeordnet ist,
- zwei Flügelhälften (23, 23'), die zu beiden Seiten des Rumpfes (21) angeordnet sind, und
- mindestens einen Vortriebspropeller (24), **dadurch gekennzeichnet, dass** der Hubschrauber ein Notschwimmwerksystem (10) nach einem der Ansprüche 6 bis 13 aufweist.

15. Hybridhubschrauber (20) nach Anspruch 14, **dadurch gekennzeichnet, dass** er zwei Vortriebspropeller (24, 24') aufweist, die zu beiden Seiten des Rumpfes (21) angeordnet sind.

## Claims

1. A method for triggering an emergency buoyancy system (10) for an aircraft (20) provided with a fuselage (21) and with two half-wings (23, 23') located on either side of said fuselage (21), said emergency buoyancy system (10) comprising:
- at least one main inflatable bag (11) suitable for being arranged in the lower part of said fuselage (21), and
- a plurality of immersion sensors (16),
during which:
- at least one secondary inflatable bag (12, 12') is arranged beneath each half-wing (23, 23'),
- at least one retractable wing landing gear (28, 28') is arranged beneath each half-wing (23, 23'), each wing landing gear (28, 28') being provided with at least one immersion sensor (16),
- said emergency buoyancy system (10) is armed,
- it is determined whether there is a risk of said aircraft (20) ditching,
- each wing landing gear (28, 28') is deployed when a risk of ditching is established,
- the start of ditching of said aircraft (20) is determined with the aid of at least one immersion sensor (16),
- each main inflatable bag (11, 11') and each secondary inflatable bag (12, 12') is inflated when said ditching is established.

2. A method according to Claim 1,
**characterised in that** it is determined that there is a risk of said aircraft (20) ditching when said aircraft (20) is below a predetermined height.

3. A method according to any one of Claims 1 to 2,
**characterised in that** said start of said ditching of said aircraft (20) is determined when at least two immersion sensors (16) of said emergency buoyancy system (10) indicate immersion.

4. A method according to Claim 3,
**characterised in that**, each wing landing gear (28, 28') comprising at least three immersion sensors (16), said start of said ditching of said aircraft (20) is determined when at least two immersion sensors (16) of a wing landing gear (28, 28') indicate immersion.

5. A method according to any one of Claims 1 to 4,
**characterised in that** each wing landing gear (28, 28') is deployed after validation of said risk of ditching by a pilot of said aircraft (20).

6. An emergency buoyancy system (10) for an aircraft (20) provided with a fuselage (21) and with two half-wings (23, 23') located on either side of said fuselage (21),
**characterised in that** said emergency buoyancy system (10) is suitable for implementing the method according to any one of Claims 1 to 5, said emergency buoyancy system (10) comprising:
- at least one main inflatable bag (11, 11') suitable for being arranged beneath said fuselage (21),
- at least one secondary inflatable bag (12, 12') suitable for being arranged beneath each half-wing (23, 23'),
- a plurality of immersion sensors (16) for determining a start of ditching of said aircraft (20),
- at least one retractable wing landing gear (28, 28') provided with at least one immersion sensor (16) and suitable for being arranged beneath each half-wing (23, 23'),
- an arming means (13) for arming said emergency buoyancy system (10),
- an anticipation means (17) for determining if there is a risk of ditching of said aircraft (20),
- a deployment means (18) for deploying each wing landing gear (28, 28'),
- a triggering means (14) connected to said arming means (13) for ordering the inflation of said inflatable bags (11, 11', 12, 12'),
- an inflation system (19) comprising at least one fluid generator (15) for inflating said inflatable bags (11, 11', 12, 12'), said inflation system (19) being connected to said triggering means (14).

7. An emergency buoyancy system (10) according to Claim 6, **characterised in that** said anticipation means (17) comprises a sensor for the height of said aircraft (20), said risk of ditching being established when said aircraft (20) is below a predetermined height.

8. An emergency buoyancy system (10) according to any one of Claims 6 to 7, **characterised in that** each secondary inflatable bag (12, 12') comprises a fastening means, said fastening means of a secondary inflatable bag (12, 12') fastening said secondary inflatable bag (12, 12') to a wing landing gear (28, 28').

9. An emergency buoyancy system (10) according to Claim 8, **characterised in that** said fastening means of a secondary inflatable bag (12, 12') fastens each secondary inflatable bag (12, 12') in a hub of a wheel (121, 121') positioned at the end of each wing landing gear (28, 28').

10. An emergency buoyancy system (10) according to Claim 8, **characterised in that** said fastening means of a secondary inflatable bag (12, 12') fastens each secondary inflatable bag (12, 12') to an articulated support (124) connected to said wing landing gear (28, 28') by an articulation (123), said articulated support (124) being deployed by means of an actuating element (122) as soon as the start of the ditching has been detected.

11. An emergency buoyancy system (10) according to any one of Claims 6 to 7, **characterised in that** each secondary inflatable bag (12, 12') comprises a fastening means, said fastening means of a secondary inflatable bag (12, 12') being suitable for fastening said secondary inflatable bag (12, 12') to a half-wing (23, 23').

12. An emergency buoyancy system (10) according to any one of Claims 6 to 11, **characterised in that** each wing landing gear (28, 28') comprises at least three immersion sensors (16).

13. An emergency buoyancy system (10) according to any one of Claims 6 to 12, **characterised in that** said emergency buoyancy system (10) comprises a validation means which enables a pilot of said aircraft (20) to validate said risk of ditching of said aircraft (20).

14. A hybrid helicopter (20) comprising:
- a fuselage (21),
- a main rotor (22) located above said fuselage (21),
- two half-wings (23, 23') located on either side of said fuselage (21) and
- at least one pusher propeller (24),
**characterised in that** it comprises an emergency buoyancy system (10) according to any one of Claims 6 to 13.

15. A hybrid helicopter (20) according to Claim 14, **characterised in that** it comprises two pusher propellers (24, 24') located on either side of said fuselage (21).
